# EUROPEAN PATENT SPECIFICATION

(11) **EP 1 630 198 B1**
(45) Date of publication and mention of the grant of the patent: **26.01.2011**
(21) Application number: 04735981.5
(22) Date of filing: 03.06.2004
(51) Int. Cl.: C08L 59/00

(54) **POLYACETAL RESIN COMPOSITION**
POLYACETALHARZZUSAMMENSETZUNG
COMPOSITION DE RESINE POLYACETAL

(30) Priority: 04.06.2003 JP 2003158976
(43) Date of publication of application: 01.03.2006
(73) Proprietor: Polyplastics Co., Ltd., Tokyo 108-8280 (JP)
(72) Inventor: KAWAGUCHI, Kuniaki c/o Polyplastics Co., Ltd., Shizuoka 4168533 (JP)
(74) Representative: Peel, James Peter
(86) International application number: PCT/JP2004/008074
(87) International publication number: WO 2005/000961

(56) References cited:
- EP-A- 0 449 605
- GB-A- 1 220 398
- JP-A- 10 259 290
- JP-A- 11 092 677
- JP-A- 2001 158 850
- US-A- 4 652 594
- US-A- 5 852 135

## Description

### Technical Field of the Invention

The present invention relates to a polyacetal resin composition having excellent mechanical characteristics.

### Background Art

Blending a reinforcement such as a glass inorganic filler to polyacetal resin is known to improve the mechanical properties such as strength and rigidity of the resin.

Since, however, since polyacetal resins are poor in activity, and glass inorganic fillers are also poor in activity, simple blending of a glass inorganic filler to a polyacetal resin to melt and knead them results in insufficient adhesiveness between them, and fails in many cases to attain expected improvement in the mechanical properties.

To this point, there have been proposed various methods for improving the mechanical properties of polyacetal resins by increasing the adhesiveness between the resin and the glass inorganic fillers.

The known methods include: blending a glass fiber and a phenoxy resin to polyacetal resin, (Claims of JP-A-49-98458); adding a glass fiber, a peroxide, and a silane coupling agent topolyacetal resin, (Claims of JP-A- 60 -219252) ; blending a glass fiber which has been sized using a polyurethane emulsion to polyoxymethylene (polyacetal resin), and further adding a silane coupling agent to the polyurethane emulsion, (Claims 1-8, and Claims 9-13 of JP-A-61-236851); blending a glass fiber and a glass flake, which have been preferably surface-treated by a silane coupling agent, to polyoxymethylene (polyacetal resin), (Claims 1 and 2 of JP-A-62-91551) ; adding a glass inorganic filler and a boric acid compound to polyacetal resin, and further applying surface treatment to the glass inorganic filler by a specific silane compound, (Claims 1 and 4 of JP-A-9-151298) ; and adding a glass inorganic filler and a hydroxycarboxylic acid compound to polyacetal resin, and further applying surface treatment to the glass inorganic filler by a specific silane compound, (Claims 1 and 3 of JP-A-2002-371168).

### Disclosure of the Invention

Although each of these methods functions to improve the chemical activity of the glass inorganic filler, the method alone is not fully satisfactory to improve the adhesiveness of the glass inorganic filler to the polyacetal resin which is chemically inactive and to achieve excellent mechanical properties.

It is an object of the present invention to solve the problems and to provide a polyacetal resin composition to satisfy ever-upgrading requirement for the mechanical properties resulted from the increasing use fields of polyacetal resin in recent years.

To attain the object, the present inventor carried out detail studies to obtain a reinforced polyacetal resin composition having excellent mechanical properties, and found that the problem is significantly improved by blending a specific amount of a specified modified polyacetal resin as a component of the polyacetal resin, thus completed the present invention.

That is, the present invention relates to a polyacetal resin composition according to present claim 1.

### Detailed Description of the Invention

Hereinafter, the present invention is described in detail. The present invention provides a polyacetal resin composition which is rein forced by blending a glass inorganic filler, wherein the polyacetal resin component (A) adopts both a polyacetal resin (A1) containing hydroxyl groups at 0 to 20 mmol/kg in the molecule and a modified polyacetal resin (A2) containing hydroxyl groups at 50 to 2000 mmol/kg in the molecule.

The polyacetal resin (A1) for use in the present invention is a polymer compound having an oxymethylene group (-CH₂O-) as the main constitutional unit. That type of polymer compound may be polyoxymethylene homopolymer, copolymer containing a small amount of other constitutional unit in addition to the oxymethylene group (including block-copolymer), or terpolymer, further may be a polymer whose molecule has not only a linear structure, but also a branched or cross-linked structure.

In general, homopolymer is manufactured by homopolymerization of formaldehyde anhydride, or by polymerization of cyclic oligomer of formaldehyde represented by the formula of (CH₂O)ₙ (n signifies an integer of 3 or more), particularly of trioxane which is a cyclic trimer of formaldehyde. Normally the homopolymer is stabilized against thermal decomposition by terminal capping thereof.

The copolymer is a polymer having 5000 or larger weight average molecular weight, containing about 85 to 99.9% by mole of a repeating group (-CH₂O-) and 15 to 0.1% by mole of a scatteringly existing group represented by the formula: 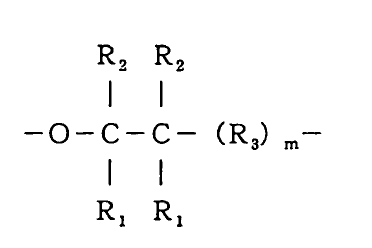 (where R₁ and R₂ are each selected from the group consisting of hydrogen, a lower alkyl and halogen-substituted lower alkyl group; R₃ is selected from the group consisting of a methylene, oxymethylene, lower alkyl- or haloalkyl-substituted methylene group, and a lower alkyl-or haloalkyl-substituted oxymethylene group; m is an integer of 0 to 3; and each lower alkyl group has carbon number of 1 or 2.) Generally the copolymer is manufactured by copolymerization of formaldehyde or a cyclic oligomer of formaldehyde represented by the formula of (CH₂O)ₙ (n is an integer of 3 or more), such as trioxane, and a compound selected from cyclic ethers and cyclic formals. Normally the obtained copolymer is stabilized against thermal decomposition by applying hydrolysis to remove instable portions at terminals.

Examples of the cyclic ether or the cyclic formal for copolymerization are ethylene oxide, 1,3-dioxolan, diethylene glycol formal, and 1,4-butanediol formal.

In addition to the above-described components, normally a component to adjust the molecular weight is used to adjust the molecular weight of polymer to be obtained. Examples of the component for adjusting molecular weight area chain-transfer agent which does not form an instable terminal, namely one or more kinds of compounds having an alkoxy group, such as methylal, methoxymethylal, dimethoxymethylal, trimethoxymethylal, and oxymethylenedi-n-butylether.

A terpolymer is prepared by conducting polymerization while further adding amonofunctional orpolyfunctional glycidyl ether compound or the like in the above-described copolymerization.

In the manufacture of above-described conventionally known polyacetal resin, action of water, methanol, or the like which exists as an impurity in the monomer components, comonomer components, and the like used for the reaction introduces a trace amount of hydroxyl groups into the molecule of polyacetal resin. Accordingly, to adjust the amount of hydroxyl group to be introduced in the molecule to a range from 0 to 20 mmol/kg, it is necessary to control the total amount of water and the total amount of methanol contained in the components (monomer component, comonomer components, and the like) used for the polymerization to 30 ppm or less, respectively, to the total amount of the components for polymerization, preferably 20 ppm or less, and particularly preferably 15 ppm or less, respectively.

The polyacetal resin (A1) for use in the present invention covers the polyacetal (co) polymer which is prepared as described above, and contains hydroxyl groups at 0 to 20 mmol/kg in the molecule. Commonly manufactured polyacetal resins in industry belong to the category.

Next, the modified polyacetal resin (A2) for use in the present invention contains hydroxyl groups at 50 to 2000 mmol/kg in the molecule, and preferably from 70 to 500 mmol/kg. The weight average molecular weight of the modified polyacetal resin (A2) is from 1000 to 100000.

The quantification of the hydroxyl group contained in the polyacetal resin may be conducted by the method described in JP-A-2001-11143.

In the present invention, when a modified polyacetal resin in which a small amount of hydroxyl groups has been introduced is employed as the modified polyacetal resin to be used together with the polyacetal resin (A1), improvement of the mechanical strength of the polyacetal resin composition containing a glass inorganic filler, which is the object of the present invention, cannot fully be achieved. On the other hand, when the modified polyacetal resin in which an excess amount of hydroxyl groups has been introduced is used, the thermal stability and other characteristics of the polyacetal resin composition degrade. Therefore, both cases are not preferable.

In the present invention, the modified polyacetal resin (A2) containing hydroxyl groups as above described is obtained either by adding further a compound containing hydroxyl groups in the manufacture of the aforementioned polyacetal resin (A1) and conducting (co)polymerization in the presence of the compound containing hydroxyl groups, or by reacting the terminals of the once-obtained polyacetal resin (A1) as described above with a compound containing hydroxyl groups. A preferred preparation method is the former one.

Examples of the compound containing hydroxyl groups used for modification include polyhydric alcohols, compounds of polyhydric alcohols in which some of the hydroxyl groups are esterified; compounds prepared by adding alkylene oxide to polyhydric alcohols or esters thereof; glycidyl ethers or glycidyl esters containing a hydroxyl group; cyclic acetals containing a hydroxyl group; and water.

The modified polyacetal resin (A2) for use in the present invention may be used after removing the instable portions at terminals by hydrolysis, or may be directly used without applying hydrolysis treatment.

In the present invention, the weight ratio of the polyacetal resin (A1) to the modified polyacetal resin (A2), constituting the polyacetal resin component (A), is A1/A2 = 99.9 to 80 / 0.1 to 20.

In each case where the modified polyacetal resin (A2) is less than 0.1% by weight or more than 20% by weight, the improvement in the mechanical properties becomes insufficient. A Generally preferable ratio of the polyacetal resin (A1) to the modified polyacetal resin (A2) is A1/A2 = 99.5 to 90 / 0.5 to 10.

For efficiently improving the mechanical strength, which is the object of the present invention, it is preferable to adjust the ratio of A1/A2 on the basis of the degree of modification (the rate of introduction of hydroxyl groups) of the modified polyacetal resin (A2) and the amount of hydroxyl groups contained in the polyacetal resin (A1).

That is, when a modified polyacetal resin (A2) having a low introduction rate of hydroxyl groups is used, an increased blending amount thereof is appropriate. When a modified polyacetal resin (A2) having a high introduction rate of hydroxyl groups is used, a decreased blending amount thereof is appropriate. When the amount of hydroxyl groups in the polyacetal resin (A1) is small, a increase blending rate of the modified polyacetal resin (A2) is appropriate. When the amount of hydroxyl groups in the polyacetal resin (A1) is large, a decreased blending rate of the modified polyacetal resin (A2) is appropriate.

Next, examples of applicable glass inorganic filler (B) for use in the present invention are fibrous (glass fiber), granular (glass bead), powdery (milled glass fiber), plate-shaped (glass flake), and hollow (glass balloon) fillers. The particle diameter, the fiber length and the like of them are not specifically limited, and any publicly known products can be applied.

In the present invention, one kind or a mixture of two or more kinds of fillers selected from these maybe used depending on the object.

In the present invention, glass inorganic fillers whose surface has been treated by a surface-treatment agent such as a silane or titanate coupling agent are used.

Examples of the silane coupling agent are vinylalkoxysilane, epoxyalkoxysilane, aminoalkoxysilane, merpactoalkoxysilane, and allylalkoxysilane.

Examples of vinylalkoxysilane are vinyltriethoxysilane, vinyltrimethoxysilane, and vinyltris(β-methoxyethoxy)silane.

Examples of epoxyalkoxysilane are γ-glycidoxypropyltrimethoxysilane, β-(3,4-epoxycyclohexyl)ethyltrimethoxysilane, and γ-glycidoxypropyltriethoxysilane.

Examples of aminoalkoxysilane are γ-aminopropyltrimethoxysilane, γ-aminopropyltriethoxysilane, γ-aminopropylmethyldimethoxysilane, γ-aminopropyltrimethoxysilane, and N-phenyl-γ-aminopropyltrimethoxysilane.

Examples of mercaptoalkoxysilane are γ-mercaptopropyltrimethoxysilane and γ-mercaptopropyltriethoxysilane.

Examples of allylalkoxysilane are γ-diallylaminopropyltrimethoxysilane, γ-allylaminopropyltrimethoxysilane, and γ-allylthiopropyltrimethoxysilane.

Examples of titanate surface treatment agent are titanium-i-propoxyoctyleneglycolate, tetra-n-butoxytitanium, and tetrakis(2-ethylhexoxy) titanium.

The amount of surface treatment agent to be used is 0.01 to 20 parts by weight to 100 parts by weight of the inorganic filler, preferably 0.05 to 10 parts by weight, and more preferably 0.05 to 5 parts by weight.

When the glass inorganic filler (B) is glass fiber, one in which a sizing agent such as a polymer binder, an adhesion promoter, and other auxiliaries are further used is preferably employed. Preferably usable polymer binder is generally an organic material such as water-dispersible or water-soluble polyvinylacetate, polyester, epoxide, polyurethane, polyacrylate, or polyolefin resin, or their mixture, which is a conventionally publicly known polymer binder.

In the present invention, the blending amount of the glass inorganic filler (B) is in a range from 3 to 200 parts by weight to 100 parts by weight of the polyacetal resin component (A), preferably from 5 to 150 parts by weight, and more preferably from 10 to 100 parts by weight. When the blending amount is less than 3 parts by weight, the improvement in the mechanical properties becomes insufficient. When the blending amount exceeds 200 parts by weight, the forming work becomes difficult.

The polyacetal resin composition according to the present invention may further contain various publicly known stabilizers and additives. The applicable stabilizer includes one or more of: hindered phenol compounds; nitrogen-containing compounds suchasmelamine, guanamine, hydrazide, and urea; and hydroxides, inorganic salts and carboxylates of alkali or alkali earthmetals. The applicable additive in the present invention includes general additives for thermoplastic resins, for example, one or more of coloring agents such as dye and pigment, lubricants, nucleators, mold-releasing agents, antistatic agents, and surface active agents.

Other than the glass inorganic filler, one kind or combined two or more kinds of publicly known inorganic, organic, and metallic fibrous, plate-like, powdery, or granular fillers may be compounded within a range not to significantly degrade the performance of the molded article, which performance is the object of the present invention.

Examples of these fillers include talc, mica, wollastonite, and carbon fiber. The fillers are, however, not limited to these ones.

To the polyacetal resin composition according to the present invention, further additives can be given to further improve the mechanical properties. Examples of these additives are: a boric acid compound disclosed in JP-A-9-151298; a hydroxycarboxylic acid compound disclosed in JP-A-2002-371168; and a conventionally publicly known organic acid and inorganic acid.

The method for preparing the composition according to the present invention is not specifically limited, and the composition is easily prepared using publicly known apparatus and method which are commonly applied as method for preparing conventional resin compositions. For example, any of following methods may be usable: i) blending individual components together, and forming pellets by kneading to extrude the blend using an extruder, followed by molding; ii) forming pellet groups each differing in the composition, blending the pellet groups by predetermined amounts together tomold, thus obtaining the molded article having the designed composition; and iii) directly charging one ormore kinds of respective components to the molding machine. For attaining homogeneous blending of these components, it is preferable that a part of the resin compositions is finely powdered, which is then blended with other components and added.

The resin composition according to the present invention can be molded by any of extrusion molding, injection molding, compression molding, vacuum molding, blow molding, and foam molding.

### Examples

Hereinafter, the present invention is described in more detail referring to the examples. Nevertheless, the present invention is not limited to the examples.

### [Preparation of polyacetal resin (A1)]

To a mixture of 96% by mole of trioxane (water content 10 ppm) and 4% by mole of 1,3-dioxolan (water content 10 ppm), 1250 ppm (to the total monomer amount) of methylal as a molecular weight adjuster, and 20 ppm (to the total monomer amount) of boron trifluoride (BF₃) as an initiating catalyst were added to conduct polymerization. The obtained polymer was introduced in an aqueous solution of 0.05% by weight of triethylamine to deactivate the catalyst, followed by separation, washing, and drying of the polymer to obtain crude polyacetal resin.

Next, to 100 parts by weight of thus obtained crude polyacetal resin, there were added 3 parts by weight of an aqueous solution of 5% by weight of triethylamine, 0.15 part by weight of melamine, and 0.3 part by weight of pentaerythrityl-tetrakis[3-(3,5-di-tert-butyl-4-hydroxyphenyl)propionate (Irganox 1010, produced by Ciba Geigy). The prepared mixture was melted to knead at 200°C in a biaxial extruder to remove instable portion, and then to stabilize by adding a stabilizer, thus obtained polyacetal resin in pellet shape. The obtained polyacetal resin was a copolymer showing Melt Index (MI) of 27.0 g/10 min, weight average molecular weight of 51000, and hydroxyl group content of 5 mmol/kg.

### [Preparation of modified polyacetal resin (A2-1)]

A modified polyacetal resin was prepared by the same procedure as that applied to the preparation of the polyacetal resin (A1) except that 800 ppm (to the total monomer amount) of water was added to a mixture of trioxane and 1,3-dioxolan, thereby conducting deactivation of the catalyst. No melting and kneading treatment was applied. The obtained modified polyacetal resin had weight average molecular weight of 22700, and contained hydroxyl groups of 100 mmol/kg.

### [Preparation of modified polyacetal resin (A2-2)]

A modified polyacetal resin was prepared by the same procedure as that applied to the preparation of the polyacetal resin (A1) except that 4200 ppm (to the total monomer amount) of ethylene glycol was added to a mixture of trioxane and 1,3-dioxolan, thereby conducting deactivation of the catalyst. No melting and kneading treatment was applied. The obtained modified polyacetal resin had weight average molecular weight of 15600, and contained hydroxyl groups of 150 mmol/kg.

### Examples 1 to 6, Comparative Examples 1 to 3

Polyacetal resin (A1), modified polyacetal resin (A2-1 or A2-2), and various types of glass fibers (B-1 to B-3) described below were blended together at the respective ratios given in Table 1. Each mixture was melted and kneaded in an extruder at 200ºC of cylinder temperature to form a composition in pellet shape. Using an injection molding machine, the respective pellet compositions were formed to prepare test chips. The methods represented below were applied to the test chips to evaluate the physical properties. The result is given in Table 1.

For comparison, a pellet-shaped composition without adding the modified polyacetal (A2) was prepared using a procedure similar to above to evaluate the physical properties. The result is also given in Table 1.

### <Tensile strength and elongation>

A tensile test chip prepared in accordance with ISO 3167 was allowed to stand for 48 hours under a condition of 23ºC and 50% RH (relative humidity), and measurement was conducted after ISO 527.

### <Applied glass inorganic fillers>

B-1: glass fiber surface-treated by γ-aminopropyltriethoxysilane.
B-2: glass fiber surface-treated by titanium-i-propoxyoctyleneglycolate.
B-3-: glass fiber of B-1 further treated by epoxide as a polymer binder.

**Table 1**

| | Resin composition | | | | | Evaluation result of physical property | |
|---|---|---|---|---|---|---|---|
| | (A1) Polyacetal resin | (A2) Modified polyacetal resin | | (B) Glass inorganic filler | | Tensile strength | Tensile elongation |
| | wt. parts | Kind | wt. parts | Kind | wt. parts | (MPa) | (%) |
| Example 1 | 99 | A2-1 | 1 | B-1 | 35 | 135 | 2.5 |
| Example 2 | 98 | A2-1 | 2 | B-1 | 35 | 142 | 2.7 |
| Example 3 | 95 | A2-1 | 5 | B-1 | 35 | 145 | 2.8 |
| Example 4 | 98 | A2-2 | 2 | B-1 | 35 | 130 | 2.4 |
| Example 5 | 98 | A2-1 | 2 | B-2 | 35 | 145 | 2.7 |
| Example 6 | 98 | A2-1 | 2 | B-3 | 35 | 148 | 2.9 |
| Comparative Example 1 | 100 | - | - | B-1 | 35 | 112 | 1.8 |
| Comparative Example 2 | 100 | - | - | B-2 | 35 | 110 | 1.7 |
| Comparative Example 3 | 100 | - | - | B-3 | 35 | 118 | 2.0 |

### Examples 7 to 11, Comparative Examples 4 to 8

Polyacetal resin (A1), modified polyacetal resin (A2-1), and various glass beads (B-4 to B-8) described below were blended together at the respective ratios given in Table 2. Each mixture was melted and kneaded in an extruder at 200ºC of cylinder temperature to prepare a composition in pellet shape. Using an injection molding machine, the respective pellet-shaped compositions were formed to prepare test chips. The chips were tested to evaluate the physical properties. The result is given in Table 2.

For comparison, a pellet-shaped composition without adding the modified polyacetal (A2) was prepared using a procedure similar to above to evaluate the physical properties. The result is also given in Table 2.

### <Applied glass inorganic fillers>

B-4 : glass beads without adding a surface treatment agent.
B-5: glass beads surface-treated by γ-aminopropyltriethoxysilane.
B-6: glass beads surface-treated by vinyltriethoxysilane.
B-7: glass beads surface-treated by γ-glycidoxypropyltriethoxysilane.
B-8: glass beads surface-treated by titanium-i-propoxyoctyleneglycolate.

**Table 2**

| | Resin composition | | | | | Evaluation result of physical property | |
|---|---|---|---|---|---|---|---|
| | (A1) Polyacetal resin | (A2) Modified polyacetal resin | | (B) Glass inorganic filler | | Tensile strength | Tensile elongation |
| | wt. parts | Kind | wt. parts | Kind | wt. parts | (MPa) | (%) |
| Example 7* | 98 | A2-1 | 2 | B-4 | 35 | 61 | 15 |
| Example 8 | 98 | A2-1 | 2 | B-5 | 35 | 64 | 17 |
| Example 9 | 98 | A2-1 | 2 | B-6 | 35 | 62 | 16 |
| Example 10 | 98 | A2-1 | 2 | B-7 | 35 | 63 | 16 |
| Example 11 | 98 | A2-1 | 2 | B-8 | 35 | 64 | 17 |
| Comparative Example 4 | 100 | - | - | B-4 | 35 | 45 | 11 |
| Comparative Example 5 | 100 | - | - | B-5 | 35 | 47 | 12 |
| Comparative Example 6 | 100 | - | - | B-6 | 35 | 48 | 13 |
| Comparative Example 7 | 100 | - | - | B-7 | 35 | 48 | 13 |
| Comparative Example 8 | 100 | - | - | B-8 | 35 | 46 | 11 |

| | | | | | | | |
|---|---|---|---|---|---|---|---|
| * Not inventive | | | | | | | |

### Examples 12 and 13, Comparative Examples 9 and 10

Polyacetal resin (A1), modified polyacetal resin (A2-1), and various milled glass fibers (B-9 and B-10) described below were blended together at the respective ratios given in Table 3. Each mixture was melted and kneaded in an extruder at 200°C of cylinder temperature to prepare a composition in pellet shape. Using an injection molding machine the respective pel let-shaped compositions were formed to prepare test chips. The chips were tested to evaluate the physical properties. The result is given in Table 3.

For comparison, a pellet-shaped composition without adding the modified polyacetal (A2) was prepared using a procedure similar to above to evaluate the physical properties. The result is also given in Table 3.

### <Applied glass inorganic fillers>

B-9 : milled glass fiber without adding a surface treatment agent.
B-10: milled glass fiber surface-treated by γ-aminopropyltriethoxysilane.

**Table 3**

| | Resin composition | | | | | Evaluation result of physical property | |
|---|---|---|---|---|---|---|---|
| | (A1) Polyacetal resin | (A2) Modified polyacetal resin | | (B) Glass inorganic filler | | Tensile strength | Tensile elongation |
| | wt. parts | Kind | wt. parts | Kind | wt. parts | (MPa) | (%) |
| Example 12* | 98 | A2-1 | 2 | B-9 | 30 | 59 | 15 |
| Example 13 | 98 | A2-1 | 2 | B-10 | 30 | 61 | 15 |
| Comparative Example 9 | 100 | - | - | B-9 | 30 | 45 | 11 |
| Comparative Example 10 | 100 | - | - | B-10 | 30 | 47 | 12 |

| | | | | | | | |
|---|---|---|---|---|---|---|---|
| * Not inventive | | | | | | | |

### Example 14, Comparative Example 11

Polyacetal resin (A1), modified polyacetal resin (A2-1), and glass flake (B-11) described below were blended together at the respective ratios given in Table 4. Each mixture was melted and kneaded in an extruder at 200ºC of cylinder temperature to prepare a composition in pellet shape. Using an injection molding machine, the respective pellet compositions were formed to prepare test chips. The chips were tested to evaluate the physical properties. The result is given in Table 4.

For comparison, a pellet-shaped composition without adding the modified polyacetal (A2) was prepared using a procedure similar to above to evaluate the physical properties. The result is also given in Table 4.

### <Applied glass inorganic filler>

B-11: glass flake surface-treated by γ-aminopropyltriethoxysilane.

**Table 4**

| | Resin composition | | | | | Evaluation result of physical property | |
|---|---|---|---|---|---|---|---|
| | (A1) Polyacetal resin | (A2) Modified polyacetal resin | | (B) Glass inorganic filler | | Tensile strength | Tensile elongation |
| | wt. parts | Kind | wt. parts | Kind | wt. parts | (MPa) | (%) |
| Example 14 | 98 | A2-1 | 2 | B-11 | 35 | 70 | 4.7 |
| Comparative Example 11 | 100 | - | - | B-11 | 35 | 59 | 3.7 |

## Claims

1. A polyacetal resin composition comprising 100 parts by weight of a polyacetal resin component (A) and 3-200 parts by weight of a glass inorganic filler (B), wherein the polyacetal resin component (A) consists of 99.9-80 parts by weight of a polyacetal resin (A1) having 0-20 mmol/kg of hydroxyl group in the molecule and 0.1-20 parts by weight of a modified polyacetal resin (A2) having 50-2, 000 mmol/kg of hydroxyl group in the molecule; wherein the modified polyacetal resin (A2) is a (co) polymer obtained either by homopolymerizing formaldehyde or a formaldehyde cyclic oligomer represented by the formula (CH₂O)ₙ, wherein n is an integer of at least 3, or by copolymerizing formaldehyde or a formaldehyde cyclic oligomer represented by the formula (CH₂O)ₙ, wherein n is an integer of at least 3, with a compound selected from a cyclic ether and a cyclic formal in the presence of a hydroxyl group-containing compound, wherein the hydroxyl group-containing compound is selected from water or polyhydric alcohols and wherein the glass inorganic filler (B) is a filler surface-treated with at least one selected from silane coupling agents and titanate coupling agents.

2. The polyacetal resin composition according to Claim 1, wherein the polyacetal resin (A1) is a (co)polymer obtained either by homopolymerizing formaldehyde or a formaldehyde cyclic oligomer represented by the formula (CH₂O)ₙ, wherein n is an integer of at least 3, or by copolymerizing formaldehyde or a formaldehyde cyclic oligomer represented by the formula (CH₂O)ₙ, wherein n is an integer of at least 3, with a compound selected from a cyclic ether and a cyclic formal.

3. The polyacetal resin composition according to Claim 1 or 2, wherein the glass inorganic filler (B) is at least one selected from glass fiber, glass bead, milled glass fiber and glass flake.

## Patentansprüche

1. Polyacetalharzzusammensetzung, die 100 Gewichtsteile einer Polyacetalharzkomponente (A) und 3-200 Gewichtsteile eines Glases als anorganischen Füllstoff (B) umfasst, wobei die Polyacetalharzkomponente (A) aus 99,9-80 Gewichtsteilen eines Polyacetalharzes (A1), das 0-20 mmol/kg Hydroxygruppen im Molekül aufweist, und 0,1-20 Gewichtsteilen eines modifizierten Polyacetalharzes (A2), das 50-2000 mmol/kg Hydroxygruppen im Molekül aufweist, besteht, wobei das modifizierte Polyacetalharz (A2) ein (Co)Polymer ist, das entweder durch Homopolymerisieren von Formaldehyd oder eines cyclischen Formaldehyd-Oligomers, das durch die Formel (CH₂O)ₙ dargestellt wird, wobei n eine ganze Zahl von wenigstens 3 ist, oder durch Copolymerisieren von Formaldehyd oder eines cyclischen Formaldehyd-Oligomers, das durch die Formel (CH₂O)ₙ dargestellt wird, wobei n eine ganze Zahl von wenigstens 3 ist, mit einer Verbindung, die aus einem cyclischen Ether und einem cyclischen Formal ausgewählt ist, in Gegenwart einer hydroxygruppenhaltigen Verbindung, wobei die hydroxygruppenhaltige Verbindung aus Wasser oder mehrwertigen Alkoholen ausgewählt ist, erhalten wird, und wobei das als anorganischer Füllstoff verwendete Glas (B) ein Füllstoff ist, der mit wenigstens einem Mittel, das aus Silan-Kopplungsmitteln und Titanat-Kopplungsmitteln ausgewählt ist, oberflächenbehandelt ist.

2. Polyacetalharzzusammensetzung gemäß Anspruch 1, wobei das Polyacetalharz (A1) ein (Co)Polymer ist, das entweder durch Homopolymerisieren von Formaldehyd oder eines cyclischen Formaldehyd-Oligomers, das durch die Formel (CH₂O)ₙ dargestellt wird, wobei n eine ganze Zahl von wenigstens 3 ist, oder durch Copolymerisieren von Formaldehyd oder eines cyclischen Formaldehyd-Oligomers, das durch die Formel (CH₂O)ₙ dargestellt wird, wobei n eine ganze Zahl von wenigstens 3 ist, mit einer Verbindung, die aus einem cyclischen Ether und einem cyclischen Formal ausgewählt ist, erhalten wird.

3. Polyacetalharzzusammensetzung gemäß Anspruch 1 oder 2, wobei das als anorganischer Füllstoff verwendete Glas (B) wenigstens ein Füllstoff ist, der aus Glasfaser, Glaskügelchen, gemahlener Glasfaser und Glasflocken ausgewählt ist.

## Revendications

1. Composition de résine de type polyacétal comprenant 100 parties en poids d'un composant de résine de type polyacétal (A) et 3 à 200 parties en poids d'une charge inorganique de verre (B), dans laquelle le composant de résine de type polyacétal (A) est constitué de 99,9 à 80 parties en poids d'une résine de type polyacétal (A1) ayant 0 à 20 mmol/kg de groupement hydroxyle dans la molécule et 0,1 à 20 parties en poids d'une résine polyacétal modifiée (A2) ayant 50 à 2000 mmol/kg de groupement hydroxyle dans la molécule; dans laquelle la résine polyacétal modifiée (A2) est un (co)polymère obtenu par homopolymérisation de formaldéhyde ou d'un oligomère cyclique de formaldéhyde représenté par la formule (CH₂O)ₙ, dans laquelle n est un nombre entier valant au moins 3, ou par copolymérisation de formaldéhyde ou d'un oligomère cyclique de formaldéhyde représenté par la formule (CH₂O)ₙ, dans laquelle n est un nombre entier valant au moins 3, avec un composé choisi parmi un éther cyclique et un formal cyclique en présence d'un composé contenant un groupement hydroxyle, le composé contenant le groupement hydroxyle étant sélectionné parmi l'eau ou des alcools polyvalents et la charge inorganique de verre (B) étant une charge traitée en surface avec au moins un agent choisi parmi les agents d'accrochage de silane et les agents d'accrochage de titanate.

2. Composition de résine de type polyacétal selon la revendication 1, dans laquelle la résine de type polyacétal (A1) est un (co)polymère obtenu par homopolymérisation de formaldéhyde ou d'un oligomère cyclique de formaldéhyde représenté par la formule (CH₂O)ₙ, dans laquelle n est un nombre entier valant au moins 3, ou par copolymérisation de formaldéhyde ou d'un oligomère cyclique de formaldéhyde représenté par la formule (CH₂O)ₙ, dans laquelle n est un nombre entier valant au moins 3, avec un composé choisi parmi un éther cyclique et un formal cyclique.

3. Composition de résine de type polyacétal selon la revendication 1 ou 2, dans laquelle la charge inorganique de verre (B) est au moins une charge choisie parmi la fibre de verre, la bille de verre, la fibre de verre broyé et la paillette de verre.
